Europäisches Patentamt

European Patent Office

Office européen des brevets

(19)

(11) **EP 1 217 756 A2**

(12) **EUROPEAN PATENT APPLICATION**

(43) Date of publication:
  **26.06.2002 Bulletin 2002/26**

(51) Int Cl.7: **H04B 1/30**, H04B 1/40

(21) Application number: **01308736.6**

(22) Date of filing: **15.10.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **20.10.2000 JP 2000320989**<br><br>(71) Applicant: **SONY CORPORATION**<br>**Tokyo 141 (JP)** | (72) Inventor: **Takagi, Kotaro,**<br>**c/o Intellectual Property Dept.**<br>**Shinagawa-ku, Tokyo 141 (JP)**<br><br>(74) Representative: **Turner, James Arthur et al**<br>**D. Young & Co.,**<br>**21 New Fetter Lane**<br>**London EC4A 1DA (GB)** |

(54) **Multiband portable radio terminal**

(57) The output of a transmitting voltage-controlled oscillator generated in an offset PLL is used as a signal source for a variable frequency input side of an image removing mixer for generating a local oscillation signal for GSM/DCS reception. A signal obtained by dividing an IF frequency generated by a transmission intermediate frequency (IF) PLL used for the offset PLL for generating a transmission frequency signal is employed for the other input of the image removing mixer. A desired frequency is thereby generated before the mixers of a demodulator.

FIG. 1

**Description**

The present invention relates to multiband portable radio terminals.

Conventionally, examples using a direct conversion (DCR) method have been proposed to reduce circuit scale of a radio (RF) unit in a small portable radio terminal. The DCR contributes to miniaturization of a portable terminal, as described below, when used in the portable terminal for communication systems having two different methods and different frequency bands such as GSM (Global System for Mobile Communication)/DCS (Digital Cellular System)/ UMTS (Universal Mobile Telecommunications System) to be introduced in the future.

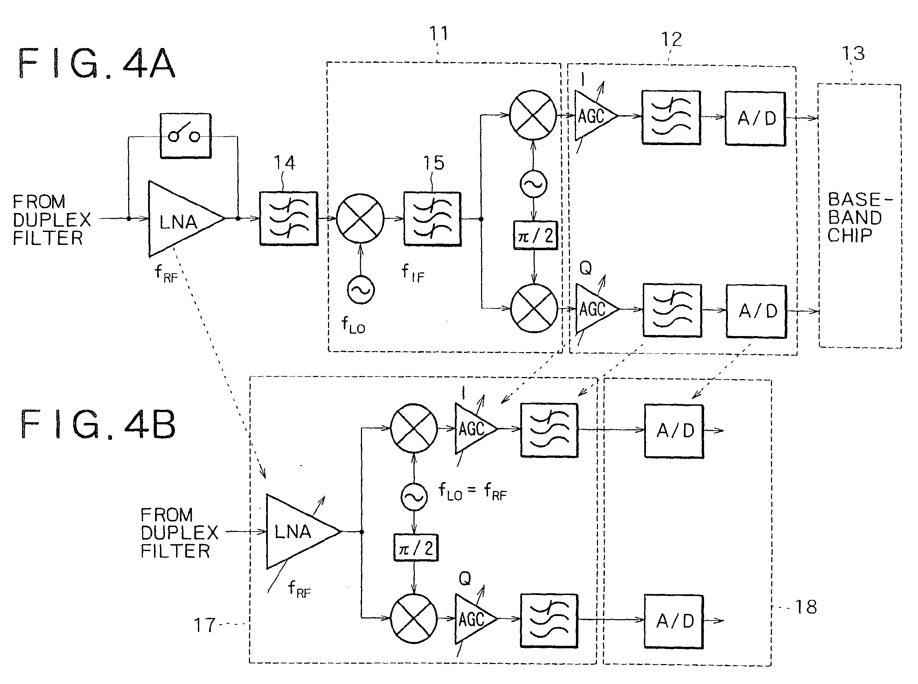

Figs. 4A and 4B are block diagrams showing a comparison between a heterodyne reception method (Fig. 4A) and a direct conversion reception (DCR) method (Fig. 4B). An apparatus adopting the heterodyne reception method requires image removing filters (band-pass filters) 14 and 15 for avoiding so-called image interference caused by converting a received frequency $f_{RF}$ into an intermediate frequency $f_{IF}$. The apparatus is inevitably large as compared with an apparatus employing the DCR method which apparatus does not require the image removing filters.

When circuit integration of a receiving unit is considered, components forming an analog front-end chip 12 in the heterodyne reception method as shown in Fig. 4A can be distributed into an RF chip 17 and a baseband chip 18 in the DCR method as shown in Fig. 4B. Therefore, the DCR method can reduce increase in chip area in integrating the components into integrated circuits (ICs).

However, when a direct-current (DC) offset component produced by DCR is outputted in a receiver-detected output (that is, baseband (BB) signal), a narrow-band digital modulation method used in the GSM and the DCS makes it impossible to use a circuit for controlling the DC offset by DC feedback. This is because such a controlling circuit cuts off low frequencies, thus resulting in a loss of part of the demodulated signal data. The DC offset is caused by a received signal frequency and a local oscillation frequency being equal to each other in DCR.

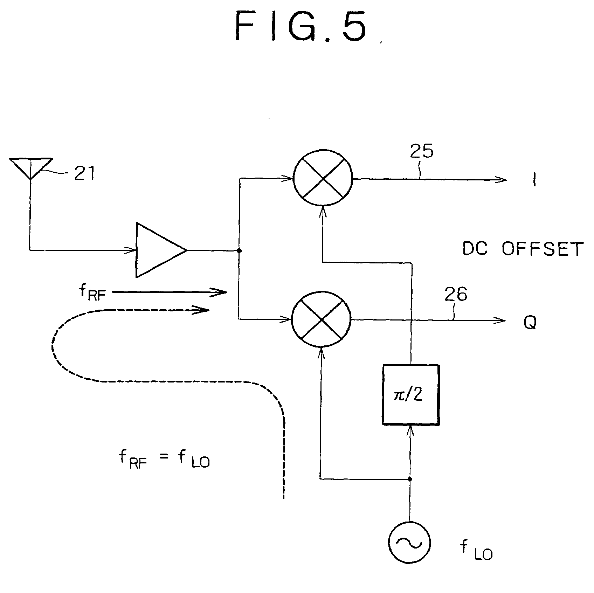

Fig. 5 is a diagram of assistance in explaining a mechanism of DC offset occurrence in DCR. Since a received RF signal and a local oscillation signal in a DCR receiving circuit have the same frequency ($f_{RF} = f_{LO}$), an I and a Q baseband signal 25 and 26 orthogonal to each other are obtained as outputs.

At the same time, however, the signal of the local oscillation frequency $f_{LO}$ leaks to a circuit in a different section along a path as indicated by a broken line in Fig. 5, and then mixed with the received RF signal because of nonlinearity of the circuits (this is referred to as self-mixing). As a result, a DC component is superimposed on the baseband (BB) I/Q output. The DC component is an undesired component for baseband data, and may be considered equivalent to noise.

Leakage paths of the local oscillation signal include various modes such for example as the local oscillation signal being routed through a substrate forming the receiving chip and then another circuit block to a received signal input section, the signal being routed on a printed board mounted with the chip, a signal coming into an antenna 21 via space being mixed with the received signal, or a combination of these.

Moreover, when the DC offset component is too significant, the offset is superimposed on DC bias voltage of the circuit and consequently its operating point is shifted to the power or ground potential. This may cause malfunction.

For such reasons, examples in which DCR is put to practical use are very few and substantially limited to systems that do not require demodulation of a DC component, that is, systems that employ a modulation method enabling DC offset compensation by DC feedback as mentioned earlier. Thus, in order to realize DCR in systems using narrow-band modulation such as GSM and DCS, measures to prevent the routing of the local oscillation signal to the RF input as described above are essential.

Incidentally, for the latest technical trend and the like of the direct conversion reception (DCR), see a paper "A Novel Approach to DCR receivers for TDMA Applications" (MWE '99), for example.

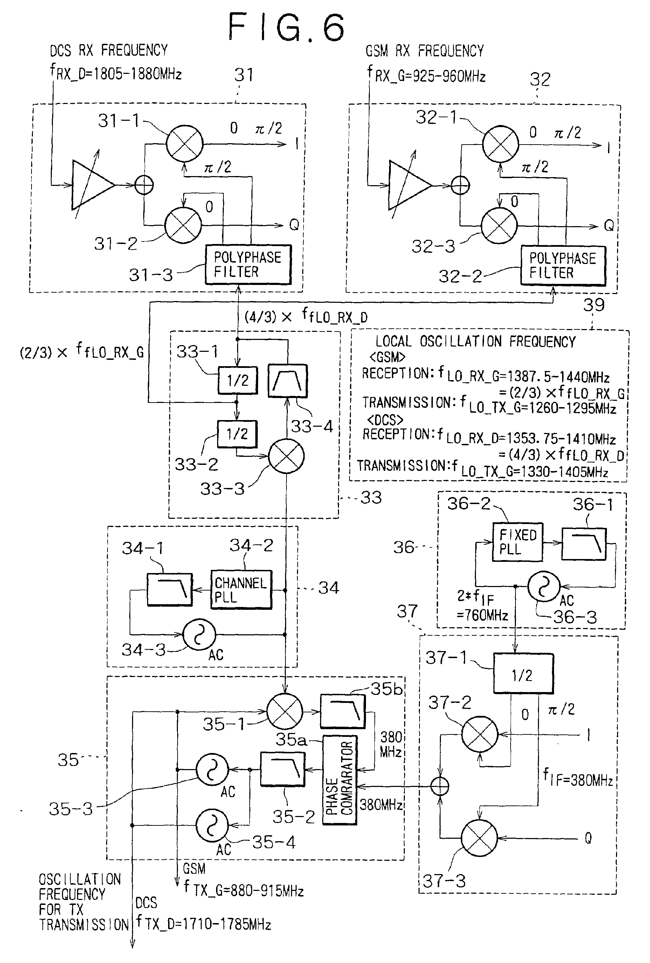

Fig. 6 is a block diagram showing an example of a configuration, according to a related art, for obtaining a local oscillation frequency for DCR from an offset oscillation frequency using an image removing mixer. In this example shown in Fig. 6, a frequency offset is provided for the local oscillation frequency, and a frequency required for DCR is obtained by a regenerative frequency divider immediately before a quadrature demodulator.

A channel PLL loop unit 34 in the configuration shown in Fig. 6 generates a signal of a channel frequency used in GSM/DCS mode. Specifically, the channel PLL loop unit 34 outputs a signal of an oscillation frequency shown in a frame 39 in Fig. 6 as a transmission and reception reference oscillation signal for GSM/DCS mode. The transmission and reception reference oscillation signals are sent to an offset PLL loop unit 35 and a regenerative frequency divider block 33, which will be described later.

A fixed PLL loop unit 36 generates an IF frequency signal of 760 MHz ($2*f_{IF} = 760$ MHz), and then supplies the signal to a quadrature modulator (GSM/DCS) 37. The quadrature modulator (GSM/DCS) 37 converts the IF frequency signal of 760 MHz from the fixed PLL loop unit 36 into IF frequency signals of 380 MHz orthogonal to each other, and then supplies the IF frequency signals to mixers 37-2 and 37-3.

The mixers 37-2 and 37-3 mix the thus converted IF frequency signals with an I and a Q baseband signal from a baseband processing unit not shown in the figure, thereby performing quadrature modulation. Then, the modulated signal is supplied to a phase comparator 35a within the offset PLL loop unit 35.

The phase comparator 35a compares the phase of an output from a low-pass filter 35b with the phase of the quadrature modulated signal of 380 MHz inputted from the quadrature modulator 37. Voltage-controlled oscillators VCOs 35-4 and 35-3 generate an oscillation frequency $f_{TX\_D}$ for DCS transmission and an oscillation frequency $f_{TX\_G}$ for GSM transmission, respectively, on the basis of a result of the comparison.

In the meantime, the regenerative frequency divider block 33 divides the frequency of the reference oscillation signal from the channel PLL loop unit 34. Specifically, a signal divided in frequency into 4/3 ($(4/3) \times f_{fLO\_RX\_D}$) is sent to an LNA + quadrature demodulator (DCS) 31, and a signal divided in frequency into 2/3 ($(2/3) \times f_{fLO\_RX\_G}$) is sent to an LNA + quadrature demodulator (GSM) 32.

Thus, in the example of the configuration, according to the related art, shown in Fig. 6, a local oscillation signal appears only in the output of the regenerative frequency divider 33, and therefore the routing as shown with reference to Fig. 5 can be prevented.

However, in multi-slot mode, which is a service to be newly started in the GSM system, the speed of switching between transmission and reception needs to be increased more than that of the method according to the related art. The switching between transmission and reception in the method, according to the related art, shown in Fig. 6 is limited by time required for convergence of the PLL (phase-locked loop) (also referred to as settling time).

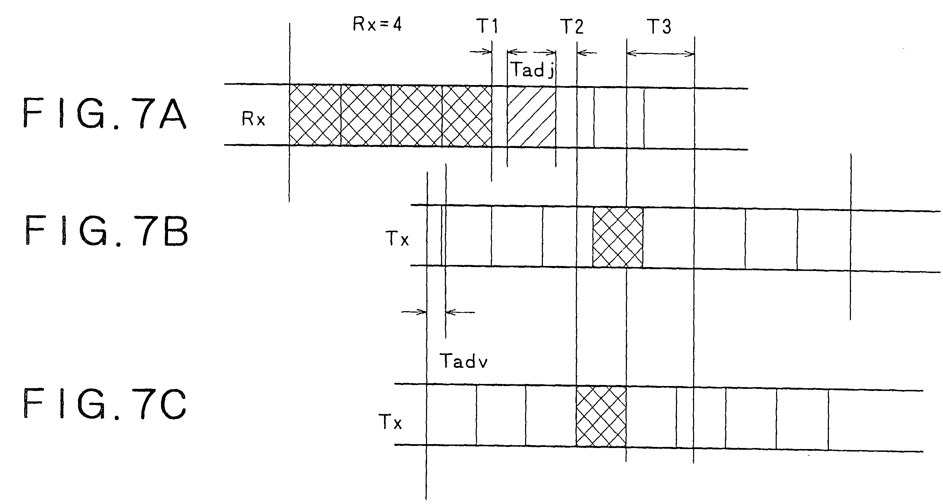

The multi-slot mode will be briefly described in the following. Figs. 7A, 7B, and 7C show an example of timing of switching between transmission and reception required in multi-slot mode. In this example, four slots are used for reception and one slot is used for transmission. While usual GSM/DCS uses one slot for each of the transmission and reception, the multi-slot mode allows use of a plurality of slots of TDMA (time division multiple access), as shown in Figs. 7A, 7B, and 7C, for purposes of downloading a large amount of data.

A period indicated as "Tadj" in Fig. 7A is a time period required for measuring power of a received signal from an adjacent base station. The time period is determined primarily by baseband processing algorithm and processing speed of a chip used (in many cases, digital signal processor (DSP)), and generally represents a time corresponding to about one slot. During this time period, the receiving system needs to switch to a frequency of the adjacent base station, that is, another channel rather than to a frequency emitted by a camping base station. A method of calculating the time will be described with reference to Figs. 7A, 7B, and 7C.

According to GSM standards (ETSI), an interval between the period of reception and the period of transmission in the above case needs to be within two slots. The standards also require that a base station in a service area with a maximum radius of 30 Km be assumed. Therefore, the terminal needs to make a transmission in timing advanced by a time required for round-trip radio propagation for about 60 Km, that is, a time of:

$$(30 \times 10^3[m] \times 2)/(3 \times 10^8[m/sec])$$

$$\fallingdotseq 232.6 \, [\mu sec]$$

$$= 63 \text{ bits (length of one bit} \fallingdotseq 3.6923 \, [\mu sec])$$

This is referred to as timing advance and corresponds to a time indicated as "Tadv" in Fig. 7B.

Also, the following relations hold in Figs. 7A, 7B, and 7C:

$$T1 = T2 = (\text{two slots - Tadv - Tadj})/2$$

$$T3 = \text{one slot + Tadv}$$

Thus, the time required for switching from RX to TX can be calculated approximately as:

$$(\text{two-slot time - Tadj - Tadv})/2$$

$$= (577 \times 2 - 577 - 232.6)/2$$

$$\fallingdotseq 170 \, [\mu sec]$$

This represents a high speed as compared with a specification, according to the related art, of about 500 [$\mu$sec].

Therefore it is extremely difficult to realize the high speed by the circuit configuration shown in Fig. 6.

Various respective aspects and features of the invention are defined in the appended claims. Features from the dependent claims may be combined with features of the independent claims as appropriate and not merely as explicitly set out in the claims.

Embodiments of the invention provide a multiband portable radio terminal compatible with, for example, the GSM, DCS and/or UMTS systems.

The present invention has been made in view of the above problems, and embodiments of the present invention can provide a multiband portable radio terminal that is compatible with GSM/DCS multi-slot mode and can avoid the problem of a DC offset in the direct conversion reception (DCR) method.

Embodiments of the present invention can provide a multiband portable radio terminal that is compatible with the above multi-slot mode and makes it possible to reduce the scale of a circuit necessary for avoiding the problem of a DC offset and thus reduce chip size when realizing an integrated circuit (IC).

According to the present invention, there is provided a multiband portable radio terminal compatible with a plurality of different communication methods and carrying out communication in a plurality of different frequency bands for the communication methods, the multiband portable radio terminal comprising: means for producing a signal of an intermediate frequency for transmission; first signal generating means for generating a first signal having a reference frequency for transmission for each of the plurality of communication methods; second signal generating means for generating a second signal on the basis of the signal of the intermediate frequency for transmission; and third signal generating means for generating a signal of a local oscillation frequency for reception by subjecting the first signal and the second signal to predetermined arithmetic; wherein the local oscillation frequency for reception is equal to a received frequency corresponding to one of the plurality of communication methods.

Thus, by subjecting the first signal and the second signal to predetermined arithmetic and thereby generating the signal of the local oscillation frequency for reception equal to the frequency of a received signal, the third signal generating means functions to control occurrence of a DC offset.

Preferably, in the multiband portable radio terminal according to the present invention, the third signal generating means forms a single image removing mixer, while the first signal generating means is a signal source for a first variable frequency input side of the image removing mixer.

In addition, preferably, the second signal generating means generates the second signal by dividing the frequency of the signal of the intermediate frequency for transmission used by the first signal generating means to generate a signal of a transmission frequency, and the second signal generating means is a signal source for a second variable frequency input side of the image removing mixer.

Thus, since the single image removing mixer is used and the output of a transmitting voltage-controlled oscillator (VCO) is used for one input of the single image removing mixer, it is possible not only to reduce circuit scale but also to eliminate the need for changing the frequency of a VCO between a period of transmission and a period of reception. Therefore, time required for switching between transmission and reception is not subject to settling time of a channel PLL.

The invention will now be described by way of example with reference to the accompanying drawings, throughout which like parts are referred to by like references, and in which:

Fig. 1 is a block diagram showing general configuration of a communication terminal according to an embodiment of the present invention;

Fig. 2 is a block diagram showing details of configuration of an RF receiving processing unit of the terminal according to the embodiment of the present invention;

Fig. 3 is a block diagram showing details of configuration of an RF transmitting processing unit of the terminal according to the embodiment of the present invention;

Figs. 4A and 4B show a comparison between heterodyne reception and direct conversion reception (DCR);

Fig. 5 is a diagram of assistance in explaining a mechanism of DC offset occurrence in DCR;

Fig. 6 is a block diagram showing an example of a configuration, according to a related art, for obtaining a local oscillation frequency for DCR from an offset oscillation frequency; and

Figs. 7A, 7B, and 7C are diagrams showing an example of timing of switching between transmission and reception required in multi-slot mode.

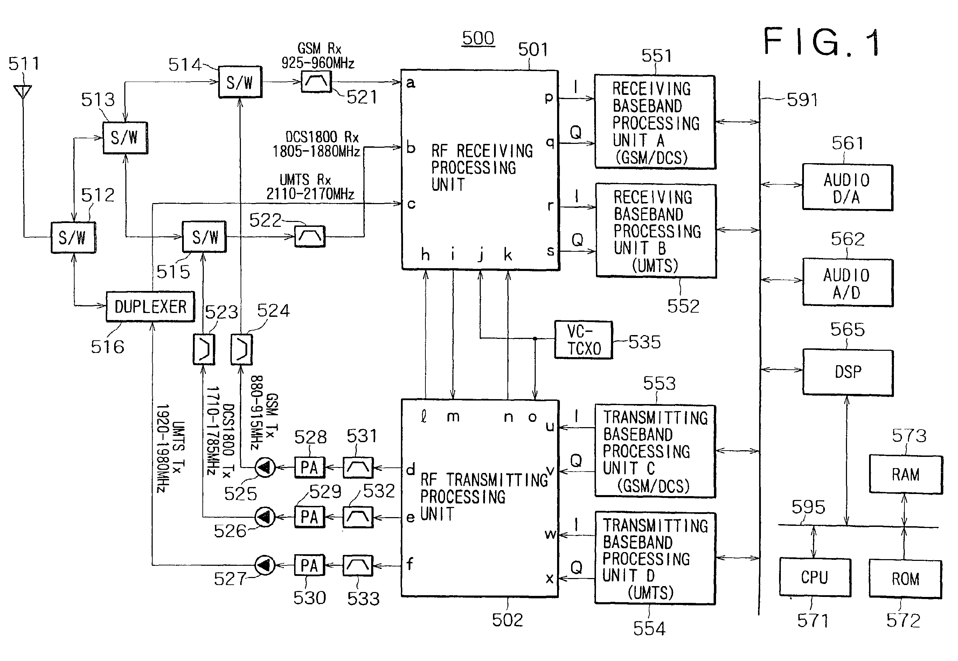

Preferred embodiments of the present invention will hereinafter be described in detail with reference to the accompanying drawings. Fig. 1 is a block diagram showing general configuration of a communication terminal according to an embodiment of the present invention. The terminal shown in Fig. 1 is a multiband portable telephone apparatus (multiband portable radio terminal) that operates in three modes: GSM (also referred to as Pan-European digital cellular telephone system) mode, DCS mode, and UMTS (WCDMA) mode. Thus, the terminal can be used as a multiband system terminal compatible with both services of a TDMA system and a CDMA system.

An RF signal received by an antenna 511 of the terminal shown in Fig. 1 is passed through a signal path formed by filters (band-pass filters) and switches (S/W) switched according to the above-mentioned modes, and then inputted to an RF receiving processing unit 501 that functions as a received signal processing unit. Details of configuration and concrete operation of the RF receiving processing unit 501 will be described later.

A receiving baseband processing unit A (551) and a receiving baseband processing unit B (552) are arranged for GSM/DCS and UMTS, respectively, in a stage succeeding the RF receiving processing unit 501. The receiving baseband processing unit A (551) and the receiving baseband processing unit B (552) subject quadrature baseband signals (an I and a Q signal) generated by the RF receiving processing unit 501 to predetermined digital baseband processing. Specifically, the receiving baseband processing units A and B have an A/D converter or the like for subjecting the I and Q signals to analog/digital (A/D) conversion to thereby generate IQ digital data having a constant bit rate.

As in the receiving system, a transmitting system is provided with a transmitting baseband processing unit C (553) and a transmitting baseband processing unit D (554) for GSM/DCS and UMTS, respectively. The transmitting baseband processing units are supplied with IQ digital data having a constant data rate which data is integrated by a digital signal processor (DSP) 565, which will be described later.

The data is subjected to digital/analog (D/A) conversion by the transmitting baseband processing units C and D, and then inputted to an RF transmitting processing unit 502 as transmitting baseband signals (I and Q signals). Details of configuration and operation of the RF transmitting processing unit 502 will be described later with reference to another drawing.

After being subjected to quadrature modulation and frequency conversion, which will be described later, by the RF transmitting processing unit 502, the signals are subjected to power amplification by power amplifiers (PA) to obtain required transmitting power, and then emitted from the antenna 511 via filters and switches switched according to the above-mentioned modes.

A VC-TCXO 535 is a variable-frequency temperature-controlled crystal oscillator, and in this case, the VC-TCXO 535 generates a reference frequency (13.00 MHz) required for transmitting and receiving processing to be described below.

The DSP 565 connected to a data bus 591 performs processing such as removing effects of fading, determining the type of a signal received, deinterleaving, error correction, and appropriate decoding processing. Compressed audio data is decompressed and decoded by the DSP 565, and then subjected to digital/analog (D/A) conversion by an audio D/A 561 according to a predetermined audio sampling rate. The D/A-converted analog signal is emitted as sound from a speaker not shown in the figure.

On the other hand, voice of a terminal user or the like converted into an analog audio signal by a microphone not shown in the figure is subjected to signal amplification by a microphone amplifier not shown in the figure, and then subjected to A/D conversion by an audio A/D 562 at an appropriate sampling rate to be thereby digitized. The thus digitized signal is encoded and compressed by the DSP 565.

The DSP 565 integrates digital data inputted from a data I/F unit not shown in the figure into appropriate blocks, and integrates the audio encoded data and communication data into the IQ digital data having a constant data rate. The thus integrated signal is the transmitting baseband signals (I and Q signals) described above.

A CPU bus 595 is connected with a central processing unit (CPU) 571 for controlling the whole of the terminal (including ON/OFF control of a voltage-controlled oscillator to be described later), a read-only memory (ROM) 572 and the like. The ROM 572 stores a program, and the like, to be executed by the CPU 571. A random access memory (RAM) 573 is used to store data and the like during calculation as required while the CPU 571 is executing a program, and to temporarily store data when the data is moved between a receiving unit and a transmitting unit.

Incidentally, an EEPROM, or an electrically erasable memory, may be provided to the CPU bus 595 to store setting parameters of setting conditions immediately before turning off the terminal, for example, so that even after the terminal is turned off, the same settings as before can be obtained when the terminal is turned on the next time.

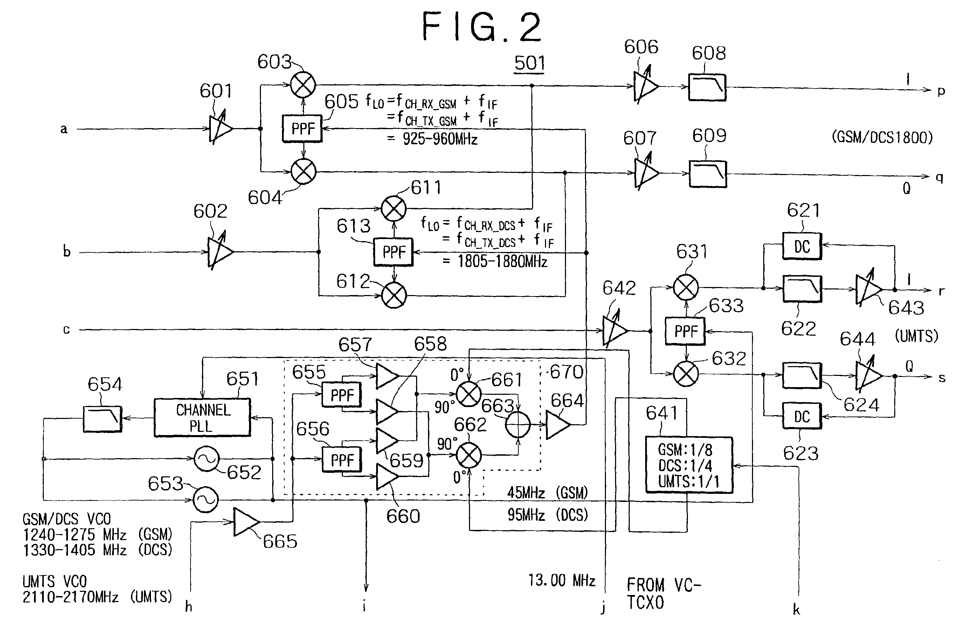

General flow of a signal in the receiving system of the terminal will hereinafter be described in more detail with reference to Figs. 1 and 2. Fig. 2 shows details of internal configuration of the RF receiving processing unit 501 shown in Fig. 1, and terminal reference letters a, b, c, ... in Fig. 2 represent connections to the RF signal input stage mentioned above, the receiving baseband processing units 551 and 552, and the RF transmitting processing unit 502.

A received RF signal is inputted to a radio-frequency switch (S/W) 512 via the antenna 511 shown in Fig. 1. The switch 512 selects signal paths depending on whether the receiver (terminal) is in GSM/DCS system mode or UMTS (WCDMA) system mode.

The received signal is fed to a radio-frequency switch 513 when the terminal is in GSM or DCS mode, and fed to a duplexer 516 when the terminal is in UMTS mode. The GSM/DCS signal is further routed to a GSM path or a DCS path by the switch 513.

More specifically, the received RF signal is fed to a radio-frequency switch 514 when the terminal is in GSM mode, and is fed to a radio-frequency switch 515 when the terminal is in DCS mode. The radio-frequency switches 514 and 515 change paths for transmission/reception.

A case where the terminal is in GSM mode will be described below. During a period of received slots Rx shown in Figs. 7A, 7B, and 7C while the terminal is in GSM mode, the input RF signal is fed to a variable gain low noise amplifier 601 in Fig. 2 via a band-pass filter 521. During a transmitting slot period, an output of a power amplifier (PA) 528 in Fig. 1 is fed through an isolator 525 and a band-pass filter 524 to a radio-frequency switch 514 in a direction opposite from that of the receiving period.

The received signal is amplified by the variable gain low noise amplifier 601, and then inputted to a quadrature demodulator comprising frequency mixers 603 and 604 and a polyphase filter 605 to be multiplied by a local oscillation frequency. The variable gain low noise amplifier 601 performs processing such as necessary band limitation and automatic gain control (AGC) so that the received signal is at a proper level. The polyphase filter 605 has a function of creating local oscillation signals orthogonal to each other.

In this case, direct conversion is realized by rendering the local oscillation frequency equal to the received RF frequency. Specifically, the local oscillation frequency $f_{LO}$ is $f_{LO} = f_{VCO\_GSM} - f_{IF} = 925$ to 960 MHz. Thus, I/Q quadrature baseband (BB) signals are obtained from outputs of the frequency mixers 603 and 604.

The BB signals are passed through variable gain amplifiers 606 and 607 and low-pass filters 608 and 609 to remove an interfering signal in a band other than that of the working frequencies, such as an adjacent channel. Thereafter, the BB signals are sent to the receiving baseband processing unit A (551), which is a baseband digital processing circuit, as shown in Fig. 1.

The variable gain low noise amplifier 601 and the variable gain amplifiers 606 and 607 are controlled for digital processing in the receiving baseband processing unit such that signal amplitude of the A/D converter inputs is constant. This enables an input dynamic range of the A/D converter to be kept constant at all times.

The same processing as that of GSM is performed in a DCS signal path. Specifically, the received signal is amplified by a variable gain low noise amplifier 602, and the signal after the amplification is inputted to a quadrature demodulator comprising frequency mixers 611 and 612 and a polyphase filter 613. BB signals obtained by multiplying the signal by a local oscillation frequency in the quadrature demodulator are passed through the variable gain amplifiers 606 and 607 and the low-pass filters 608 and 609 as in the case of GSM, and thereafter the BB signals are sent to the receiving baseband processing unit.

In UMTS mode, on the other hand, the received RF signal is separated from a transmitting signal by the duplexer 516, and then fed to a variable gain low noise amplifier 642 in Fig. 2. At the same time, the contiguous transmitting signal is fed toward the radio-frequency switch 512 via the duplexer 516. Unlike the cases of GSM/DCS described above, a high-speed switch is not used because WCDMA is a continuous transmission and reception system. Therefore, such arrangement is inevitably used because of characteristics of the system.

As in the case of GSM/DCS, the received RF signal in UMTS mode is amplified by a variable gain low noise amplifier (in this case the amplifier 642), and then fed to a quadrature demodulator comprising frequency mixers 631 and 632 and a polyphase filter 633. As a result, a baseband (BB) I/Q signal is obtained as output of the frequency mixers 631 and 632. These signals are then inputted via low-pass filters 622 and 624 to variable gain amplifiers 643 and 644 to be controlled to a constant amplitude. Thereafter, the signals controlled in amplitude are sent to an A/D converter (not shown) included in the receiving baseband processing unit B (552) in a succeeding stage.

UMTS mode is different from GSM/DCS mode in that in UMTS mode, DC feedback is obtained by DC amplifiers 621 and 623 from the outputs of the circuits comprising the low-pass filters and the variable gain amplifiers. This is because the band of a WCDMA signal is 2 MHz, which is sufficiently broader than 200 KHz of GSM/DCS, and therefore information included in the signal is not lost very much even when low frequencies are removed by the DC feedback.

Generally, cutoff frequencies in a low band are about 2 KHz. In GSM/DCS, loss of 2 KHz of low frequencies renders normal reception impossible. This indicates that in a WCDMA system, DC offset canceling can be realized by a relatively simple circuit as shown in Fig. 2, but the DC offset canceling is difficult in GSM/DCS.

Thus, in UMTS mode, no offset frequency for reducing a DC offset is used, and a voltage-controlled oscillator 653 can be oscillated at an oscillation frequency equal to the frequency of the received RF signal (2110 to 2170 MHz).

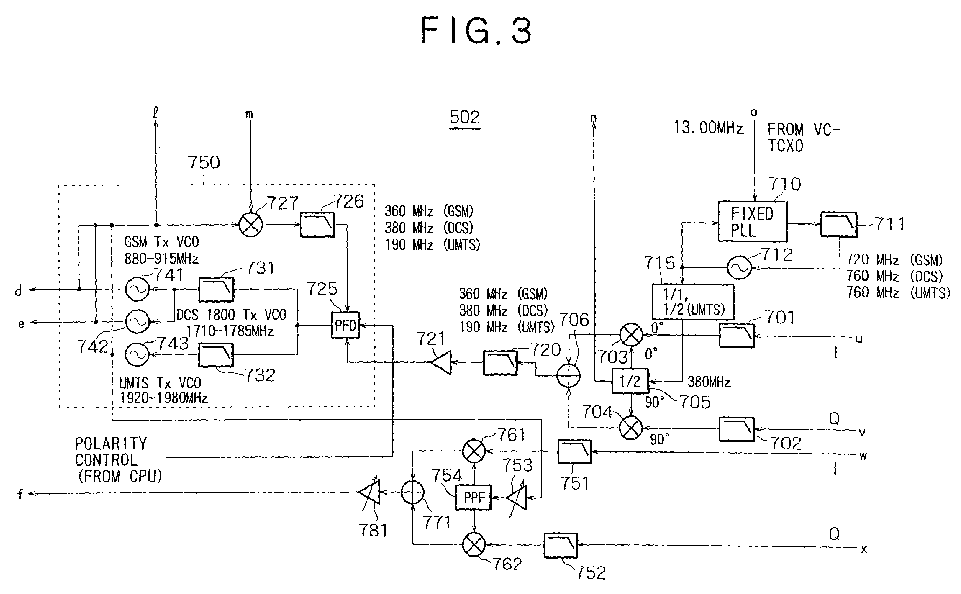

The transmitting system of the terminal will next be described by following flow of a signal therein. Fig. 3 shows details of configuration of the RF transmitting processing unit 502 shown in Fig. 1, and terminal reference letters d, e, f, ... in Fig. 3 represent connections to the RF signal transmitting stage, the transmitting baseband processing units 553 and 554, and the RF receiving processing unit 501.

When the terminal is in GSM (DCS) mode, an I/Q signal is sent from the transmitting baseband processing unit C (553) to the RF transmitting processing unit 502. Specifically, the I and Q signals are fed to a quadrature modulator comprising frequency mixers 703 and 704 and a frequency divider 705 via low-pass filters 701 and 702 shown in Fig. 3.

The frequency divider 705 is supplied with a signal obtained by dividing a signal from a fixed PLL 710 (for generating a fixed frequency of 720 MHz in GSM and a fixed frequency of 760 MHz in DCS) by means of a frequency divider 715. Thus, two signals orthogonal to each other and having a frequency of 360 MHz (in GSM) (380 MHz in DCS) are obtained as outputs of the frequency divider 705.

Consequently, an IF signal of 360 MHz (380 MHz) resulting from quadrature modulation with baseband (BB) signals is obtained from an output of the above-mentioned quadrature modulator. The IF signal is sent to a phase comparator (PFD) 725 via a low-pass filter 720 and a radio-frequency amplifier 721.

During GSM mode, a voltage-controlled oscillator 741 for GSM is operating (ON), while other voltage-controlled oscillators 742 and 743 are stopped (OFF). During DCS mode, the voltage-controlled oscillator 742 for DCS is ON, while the other voltage-controlled oscillators 741 and 743 are OFF. An output from the voltage-controlled oscillator 741, for example, is multiplied by a frequency mixer 727 by a signal from a channel PLL voltage-controlled oscillator 652 for GSM shown in Fig. 2.

When a channel PLL 651 is controlled such that the oscillation frequency for GSM/DCS of the voltage-controlled oscillator 652 in this case is

$$f_{CH\_TX\_GSM} = 1240 \text{ to } 1275 \text{ MHz}$$

$$f_{CH\_TX\_DCS} = 1330 \text{ to } 1405 \text{ MHz} \tag{1}$$

then frequencies representing a sum of and a difference between the $f_{CH\_TX\_GSM}$ ($f_{CH\_TX\_DCS}$) and the oscillation frequency $f_{TX\_GSM} = 880 \text{ to } 915 \text{ MHz}$ ($f_{TX\_DCS} = 1710 \text{ to } 1785 \text{ MHz}$) of the voltage-controlled oscillator 741 are obtained as output from the frequency mixer 727.

Thus, a signal having frequencies of

$$\left| f_{CH\_TX\_GSM} \pm f_{TX\_GSM} \right|$$

$$\left| f_{CH\_TX\_DCS} \pm f_{TX\_DCS} \right| \tag{2}$$

is fed to a low-pass filter 726.

When the cutoff frequency of the low-pass filter 726 is appropriately selected, the higher of the two frequencies is removed, and only the frequency of

$$f_{CH\_TX\_GSM} - f_{TX\_GSM}$$

$$f_{TX\_DCS} - f_{CH\_TX\_DCS} \tag{3}$$

is inputted to the phase comparator 725.

The phase comparator 725 compares the signal having the frequency of the above (3) with the above-mentioned IF signal having a frequency of 360 MHz (GSM) (380 MHz (DCS)), and then outputs a resulting phase error to a loop filter 731. The loop filter 731 integrates the inputted phase error component to convert into a DC voltage, and then applies the DC voltage to a control terminal of the voltage-controlled oscillator 741 (GSM) (voltage-controlled oscillator 742 in DCS).

In the thus formed loop, the frequencies of the two input signals of the phase comparator converge to be equal to each other, and consequently:

$$f_{CH\_TX\_GSM} - f_{TX\_GSM} = 360 \text{ MHz}$$

$$f_{TX\_DCS} - f_{CH\_TX\_DCS} = 380 \text{ MHz} \tag{4}$$

When polarity of the phase comparator 725 in GSM and DCS is set such that the left side of the above (4) becomes a positive value, the system of an offset PLL 750 (a part enclosed by a dotted line in Fig. 3) converges. However, it is to be noted that when the polarity of the phase comparator 725 is reversed, the system diverges and therefore the frequency of the voltage-controlled oscillator 741 (GSM) (voltage-controlled oscillator 742 in DCS) will not be fixed. Incidentally, the polarity of the phase comparator 725 is set according to a polarity control signal from the CPU 571 mentioned above.

When the equations (1) are substituted into the equations (4), the following is obtained:

$$f_{TX\_GSM} = f_{CH\_TX\_GSM} - 360 \text{ MHz}$$

$$= 880 \text{ to } 915 \text{ MHz}$$

$$f_{TX\_DCS} = f_{CH\_TX\_DCS} + 380 \text{ MHz}$$

$$= 1710 \text{ to } 1785 \text{ MHz} \qquad \qquad \text{... (5)}$$

Thus, the oscillation frequency of the voltage-controlled oscillator 741 (GSM) (voltage-controlled oscillator 742 in DCS) becomes equal to the transmission frequency of GSM (DCS).

Incidentally, for effecting GMSK (Gaussian-filtered Minimum Shift Keying) modulation used in GSM/DCS, constants of the loop filter need to have a cutoff frequency sufficiently higher than the modulation rate.

In UMTS mode, on the other hand, the same operation as in GSM/DCS is performed. In this case, since the frequency to be created by the channel PLL is relatively close to that of DCS, the same voltage-controlled oscillator can be used. The operation in UMTS mode will be described below.

In UMTS mode, the modulator comprising the low-pass filters 701 and 702, the frequency mixers 703 and 704, and the frequency divider 705 in Fig. 3 is not used as a modulator. For example, by turning off the frequency mixer 704 and adding Vbias and 0 V to I channel differential input, the frequency mixer 703 operates as a cascaded amplifier.

In UMTS mode, a signal generated by the fixed PLL 710 is divided into 1/4 via the frequency divider 715 and the frequency divider 705. The signal of 190 MHz after the frequency division is fed to the phase comparator 725 via the frequency mixer 703, the low-pass filter 720, and the radio-frequency amplifier 721. The signal of 190 MHz is a non-modulated signal, unlike that in GSM/DCS mode.

During UMTS mode, the voltage-controlled oscillator 743 for UMTS is ON, while the other voltage-controlled oscillators 741 and 742 are OFF. An output from the voltage-controlled oscillator 743 is multiplied by the frequency mixer 727 by a signal from the channel PLL voltage-controlled oscillator 653 for UMTS (see Fig. 2).

When the channel PLL 651 is controlled such that the oscillation frequency of the voltage-controlled oscillator 653 in this case is

$$f_{CH\_TX\_UMTS} = 2110 \text{ to } 2170 \text{ MHz} \qquad (6)$$

then frequencies representing a sum of and a difference between the $f_{CH\_TX\_UMTS}$ and the oscillation frequency $f_{TX\_UMTS} = 1920$ to 1980 MHz of the voltage-controlled oscillator 743 are obtained as output from the frequency mixer 727.

Thus, a signal having frequencies of

$$\left| f_{CH\_TX\_UMTS} \pm f_{TX\_UMTS} \right| \qquad (7)$$

is fed to the low-pass filter 726. When the cutoff frequency of the low-pass filter 726 is appropriately selected, the higher of the two frequencies is removed, and only the frequency of

$$f_{CH\_TX\_UMTS} - f_{TX\_UMTS} \qquad (8)$$

is obtained.

The thus obtained signal is inputted to the phase comparator 725. The phase comparator 725 compares the inputted signal with the above-mentioned IF signal (signal having a frequency of 190 MHz), and then outputs a resulting phase error to a loop filter 732. The loop filter 732 integrates the phase error component to convert into a DC voltage. The voltage is applied to a control terminal of the voltage-controlled oscillator 743.

In the thus formed loop, the frequencies of the two input signals of the phase comparator 725 converge to be equal to each other, and consequently:

$$f_{CH\_TX\_GSM} - f_{TX\_UMTS} = 190 \text{ MHz} \qquad (9)$$

When the equation (6) is substituted into the equation (9), the following is obtained:

$$f_{TX\_UMTS} = f_{CH\_TX\_UMTS} - 190 \text{ MHz}$$
$$= 1920 \text{ to } 1980 \text{ MHz} \qquad \ldots (10)$$

Thus, the oscillation frequency of the voltage-controlled oscillator 743 becomes equal to the transmission frequency of UMTS.

In UMTS mode, the output signal from the voltage-controlled oscillator 743 is inputted to a polyphase filter 754 via a variable gain amplifier 753. The polyphase filter 754 forms a UMTS (WCDMA) quadrature modulation unit in conjunction with frequency mixers 761 and 762. Thus, an I and a Q baseband signal sent from the baseband processing unit 554 to the frequency mixers 761 and 762 via low-pass filters 751 and 752 are mixed by the frequency mixers 761 and 762 with signals orthogonal to each other outputted from the polyphase filter 754.

A signal resulting from such quadrature modulation is inputted to a power amplifier (PA) 530 via a variable gain amplifier 781 and a band-pass filter 533. Then, an output from the power amplifier 530 is fed through an isolator 527 to the duplexer 516.

Generation of local oscillation frequency for reception will next be described. As described above, in UMTS (or WCDMA), a DC offset compensating circuit can be realized by an analog circuit. Therefore, even when a local oscillation frequency signal leaks to the input side of the variable gain low noise amplifier 642 (Fig. 2), for example a transmission line connected to the duplexer 516, a compensating circuit formed by the DC amplifiers 621 and 623 can remove a DC offset. Thus, it is not necessary to set the oscillation frequency of the voltage-controlled oscillator 653 to a frequency different from that of a received RF signal.

As expressed by the equation (6), the oscillation frequency of the voltage-controlled oscillator 653 is equal to received frequency in a UMTS band:

$$f_{RX\_UMTS} = f_{CH\_RX\_UMTS} = f_{CH\_TX\_UMTS}$$
$$= 2110 \text{ to } 2170 \text{ MHz}$$

In GSM (DCS), on the other hand, a DC offset needs to be reduced as much as possible, and hence the voltage-controlled oscillator 652 needs to be oscillated at a frequency different from received frequency. Thus, the oscillation frequency of the voltage-controlled oscillator 652 during slot reception is set to the same frequency as in transmission (TX).

Specifically, the oscillation frequency of the voltage-controlled oscillator 652 is set as follows:

$$f_{CH\_RX\_GSM} = f_{CH\_TX\_GSM}$$
$$= 1240 \text{ to } 1275 \text{ MHz}$$

$$f_{CH\_RX\_DCS} = f_{CH\_TX\_DCS}$$
$$= 1330 \text{ to } 1405 \text{ MHz}$$

As shown by the equations (5), the frequency obtained by this signal and the transmitting offset PLL system is equal to the transmission frequency of GSM (DCS):

$$f_{TX\_GSM} = 880 \text{ to } 915 \text{ MHz}$$

$$f_{TX\text{-}DCS} = 1710 \text{ to } 1785 \text{ MHz} \tag{11}$$

During a period of reception in GSM (DCS) (arrangements for DCS will hereinafter be indicated with parentheses), the power amplifier 528 (power amplifier 529) is turned off, and an oscillation signal of the transmitting voltage-controlled oscillator 741 (voltage-controlled oscillator 742) is inputted to a polyphase filter 655 (polyphase filter 656) via a buffer amplifier 665 in Fig. 2.

The filters separate the signal inputted thereto into two signals orthogonal to each other. The signals are inputted to frequency mixers 661 and 662 via a buffer amplifier 657 (buffer amplifier 659) and a buffer amplifier 658 (buffer amplifier 660), respectively.

In the meantime, a fixed signal of 720 MHz (760 MHz) generated by the fixed PLL 710 and a voltage-controlled oscillator 712 in Fig. 3 is divided in frequency into 1/2 by the frequency divider 715 (1/1 frequency divider in this case) and the frequency divider 705, and then inputted to a frequency divider 641 in Fig. 2. The frequency divider 641 further divides the frequency of the signal into 1/8 (1/4), thereby generating signals of 45 MHz (95 MHz) orthogonal to each other. Then, the signals are each fed to the other input terminal of the frequency mixer 661 and the frequency mixer 662.

When the four signals (the output signals from the buffer amplifiers 657 to 660 and the output signals from the frequency divider 641) are in a phase relation as shown in Fig. 2, the following signals appear in outputs of the frequency mixers 661 and 662, respectively.

$$2 \cdot \sin\omega_{TX\_GSM} \cdot \cos\omega_{IF}$$

$$= \sin(\omega_{TX\_GSM} + \omega_{IF}) + \sin(\omega_{TX\_GSM} - \omega_{IF}) \tag{12a}$$

$$2 \cdot \sin\omega_{TX\_DCS} \cdot \cos\omega_{IF}$$

$$= \sin(\omega_{TX\_DCS} + \omega_{IF}) + \sin(\omega_{TX\_DCS} - \omega_{IF}) \tag{12b}$$

$$2 \cdot \cos\omega_{TX\_GSM} \cdot \sin\omega_{IF}$$

$$= \sin(\omega_{TX\_GSM} + \omega_{IF}) - \sin(\omega_{TX\_GSM} - \omega_{IF}) \tag{13a}$$

$$2 \cdot \cos\omega_{TX\_DCS} \cdot \sin\omega_{IF}$$

$$= \sin(\omega_{TX\_DCS} + \omega_{IF}) - \sin(\omega_{TX\_DCS} - \omega_{IF}) \tag{13b}$$

When the signals (the outputs of the two frequency mixers 661 and 662) expressed by these equations are added to each other by an adder 663 in the next stage ((12a) + (13a) and (12b) + (13b) are determined from the above equations), only the following signals are extracted.

$$\sin(\omega_{TX\_GSM} + \omega_{IF})$$

$$\sin(\omega_{TX\_DCS} + \omega_{IF}) \tag{14}$$

Thus, the following frequencies are obtained:

$$f_{TX\_GSM} + f_{IF}$$

$$f_{TX\_DCS} + f_{IF} \tag{15}$$

where $f_{IF}$ is the output of the frequency divider 641 and is 45 MHz (95 MHz).

A circuit (part 670 enclosed by a dotted line in Fig. 2) formed by the polyphase filter 655 (656), the frequency mixers 661 and 662 and the like described above can extract only one of the two frequencies generated in frequency mixing, and therefore is referred to as an image removing mixer.

Thus, from the equations (11) and the equations (15),

$$f_{CH\_RX\_GSM} + f_{IF}$$

$$= (880 + 45) \text{ to } (915 + 45) \text{ MHz}$$

$$= 925 \text{ to } 960 \text{ MHz} \qquad \qquad \ldots (16a)$$

$$f_{CH\_RX\_DCS} + f_{IF}$$

$$= (1710 + 95) \text{ to } (1785 + 95) \text{ MHz}$$

$$= 1805 \text{ to } 1880 \text{ MHz} \qquad \qquad \ldots (16b)$$

Hence, the frequency equal to received frequency of GSM (DCS) is obtained.

The signals are fed to the polyphase filter 605 (polyphase filter 613) via a radio-frequency amplifier 664. Then, direct quadrature demodulation for GSM is performed by the quadrature demodulator comprising the frequency mixers 603 and 604 and the polyphase filter 605. Direct quadrature demodulation for DCS is performed by the quadrature demodulator comprising the frequency mixers 611 and 612 and the polyphase filter 613.

Thus, by feeding a frequency different from the received RF frequency until immediately before local oscillation input to the DCR demodulator and generating a desired frequency before the mixers of the demodulator, the terminal avoids leakage of the local oscillation signal having the same frequency as that of the received RF signal to other circuit blocks as much as possible.

In order to deal with multi-slot mode as an additional function of GSM/DCS, the output of a transmitting VCO is used for one input of the image removing mixer used for generating the local oscillation signal for reception, thereby eliminating the need for control to change the frequency of a VCO between a period of transmission and a period of reception.

When the circuit configurations shown in Figs. 1 to 3 are viewed from a standpoint of circuit integration (integration into an IC), each of the circuit blocks shown in Fig. 2 and Fig. 3 can be integrated into an IC except for part of the loop filters. Thus, the circuit blocks in Fig. 2 are integrated into a receiving system IC, and the circuit blocks in Fig. 3 are integrated into a transmitting system IC.

As described above, according to the present embodiment, the output of a transmitting voltage-controlled oscillator (VCO) is used for one input of the single image removing mixer for generating the local oscillation signal for GSM/DCS reception, thereby eliminating the need for changing the frequency of a voltage-controlled oscillator between a period of transmission and a period of reception, that is, eliminating the need for the switching of the channel PLL (phase-locked loop). As a result, time required for switching between transmission and reception and time required for the switching of frequency in handover between GSM and DCS are not subject to settling time of the channel PLL. Therefore, the terminal is readily compatible with multi-slot mode as a communication terminal.

In addition, in order to obtain the local oscillation frequencies for GSM and DCS reception, a single image removing mixer is used to generate the two receiving local oscillation frequencies. Therefore, it is possible to avoid a DC offset without extremely increasing circuit scale when integrating the transmitting and receiving RF blocks into ICs.

Furthermore, a signal obtained by dividing an IF frequency generated by the transmission intermediate frequency (IF) PLL used for the offset PLL for generating a transmission frequency signal is employed for the other input of the image removing mixer, thereby reducing increase in the number of parts and simplifying configuration of the transmitting and receiving circuits.

Conventionally (in a configuration example, according to the related art, shown in Fig. 6, for example), a fractional L type PLL is used as the channel PLL, thus resulting in a disadvantage of expanded circuit scale. On the other hand, a general PLL can be used as the channel PLL in the terminal according to the foregoing embodiment. This also provides an effect of reducing increase in circuit scale when integrating the channel PLL into an IC.

In addition, by feeding a frequency different from the received RF frequency until immediately before local oscillation input to the DCR demodulator and generating a desired frequency before the mixers of the demodulator, it is possible to avoid mixing of an undesired signal component from the image removing mixer circuit into the transmission system circuit.

The present invention is not limited to the embodiment described above, and is susceptible of various modifications without departing from the spirit of the present invention. For example, when the multiband portable radio terminal is in a period of transmission, bias power to the buffer amplifier 665 may be controlled to be turned off. This makes it possible to avoid mixing of an undesired signal component from the image removing mixer 670 into the transmission system circuit.

**Claims**

1.  A multiband portable radio terminal compatible with a plurality of different communication methods and carrying out communication in a plurality of different frequency bands for the communication methods, said multiband portable radio terminal comprising:

    means for producing a signal of an intermediate frequency for transmission;
    first signal generating means for generating a first signal having a reference frequency for transmission for each of said plurality of communication methods;
    second signal generating means for generating a second signal on the basis of said signal of the intermediate frequency for transmission; and
    third signal generating means for generating a signal of a local oscillation frequency for reception by subjecting said first signal and said second signal to predetermined arithmetic;

    wherein said local oscillation frequency for reception is equal to a received frequency corresponding to one of said plurality of communication methods.

2.  A multiband portable radio terminal as claimed in claim 1, wherein said third signal generating means forms a single image removing mixer, and said first signal generating means is a signal source for a first variable frequency input side of the image removing mixer.

3.  A multiband portable radio terminal as claimed in claim 2, wherein said second signal generating means generates said second signal by dividing the frequency of said signal of the intermediate frequency for transmission used by said first signal generating means to generate a signal of a transmission frequency, and said second signal generating means is a signal source for a second variable frequency input side of said image removing mixer.

4.  A multiband portable radio terminal as claimed in claim 3, wherein said intermediate frequency for transmission and a value of said frequency division are set such that frequency of said second signal obtained by dividing said intermediate frequency for transmission becomes equal to a difference between said transmission frequency and said received frequency.

5.  A multiband portable radio terminal as claimed in claim 3, wherein each of said first signal and said second signal is formed by signals orthogonal to each other, and as said predetermined arithmetic, said third signal generating means takes in the orthogonal signals from said first variable frequency input side and said second variable frequency input side for multiplication, and then adds results of the multiplication together to thereby generate said signal of the local oscillation frequency for reception.

6.  A multiband portable radio terminal as claimed in claim 4, further comprising:

    fourth signal generating means for generating a fourth signal by forming a channel phase-locked loop for each of said plurality of communication methods;
    means for multiplying said first signal and said fourth signal together; and
    means for outputting a phase error signal by comparing the phases of a signal obtained by said multiplication and a predetermined fixed frequency signal;

    wherein said first signal generating means forms an offset phase-locked loop, and the offset phase-locked loop is pulled into synchronism on the basis of said phase error signal to converge a system of the phase-locked loop by reversing polarity of said phase error signal depending on whether said multiband portable radio terminal is in a first communication mode or in a second communication mode among said plurality of communication methods so that when said multiband portable radio terminal is in said first communication mode, a difference frequency obtained by subtracting said reference frequency for transmission from frequency of said fourth signal becomes equal to said fixed frequency, whereas when said multiband portable radio terminal is in said second communication mode, a difference frequency obtained by subtracting the frequency of said fourth signal from said reference frequency for transmission becomes equal to said fixed frequency.

7.  A multiband portable radio terminal as claimed in claim 3, wherein a buffer amplifier is inserted in a signal path between said first signal generating means and said image removing mixer.

8.  A multiband portable radio terminal as claimed in claim 7, wherein when said multiband portable radio terminal is in a period of transmission, bias power to said buffer amplifier is turned off.

9.  A multiband portable radio terminal as claimed in claim 6, wherein said plurality of communication methods include a time division multiple access (TDMA) method and a code division multiple access (CDMA) method.

10. A multiband portable radio terminal as claimed in claim 9, wherein said first communication mode is a GSM (Global System for Mobile Communication) employing a communication form of said TDMA method.

11. A multiband portable radio terminal as claimed in claim 9, wherein said second communication mode is a DCS (Digital Cellular System) employing a communication form of said TDMA method.

# FIG. 1

# FIG.2

EP 1 217 756 A2

$f_{LO} = f_{CH\_RX\_GSM} + f_{IF}$
$= f_{CH\_TX\_GSM} + f_{IF}$
$= 925\text{-}960MHz$

$f_{LO} = f_{CH\_RX\_DCS} + f_{IF}$
$= f_{CH\_TX\_DCS} + f_{IF}$
$= 1805\text{-}1880MHz$

(GSM/DCS1800)

(UMTS)

CHANNEL PLL

GSM:1/8
DCS:1/4
UMTS:1/1

45MHz (GSM)
95MHz (DCS)

GSM/DCS VCO
1240-1275 MHz (GSM)
1330-1405 MHz (DCS)

UMTS VCO
2110-2170MHz (UMTS)

13.00 MHz

FROM VC-TCXO

# FIG.3

502

EP 1 217 756 A2

FIG. 4A

FROM DUPLEX FILTER

LNA $f_{RF}$

14

$f_{LO}$

$f_{IF}$

15

$\pi/2$

I AGC

Q AGC

A/D

A/D

BASE-BAND CHIP

11

12

13

FIG. 4B

FROM DUPLEX FILTER

LNA $f_{RF}$

$f_{LO} = f_{RF}$

$\pi/2$

I AGC

Q AGC

A/D

A/D

17

18

# FIG.5

$f_{RF}$

$f_{RF} = f_{LO}$

25

DC OFFSET

26

I

Q

$\pi/2$

$f_{LO}$

21

# F I G. 6

DCS RX FREQUENCY
$f_{RX\_D}=1805-1880MHz$

GSM RX FREQUENCY
$f_{RX\_G}=925-960MHz$

31

32

31-1    0    $\pi/2$    I

$\pi/2$

31-2    0    Q

31-3    POLYPHASE FILTER

32-1    0    $\pi/2$    I

$\pi/2$

32-3    0    Q

32-2    POLYPHASE FILTER

39

$(4/3) \times f_{fLO\_RX\_D}$

$(2/3) \times f_{fLO\_RX\_G}$

33-1    1/2

33-2    1/2

33-3

33-4

LOCAL OSCILLATION FREQUENCY
<GSM>
RECEPTION: $f_{LO\_RX\_G}=1387.5-1440MHz$
$= (2/3) \times f_{fLO\_RX\_G}$
TRANSMISSION: $f_{LO\_TX\_G}=1260-1295MHz$
<DCS>
RECEPTION: $f_{LO\_RX\_D}=1353.75-1410MHz$
$= (4/3) \times f_{fLO\_RX\_D}$
TRANSMISSION: $f_{LO\_TX\_G}=1330-1405MHz$

33

34-1    34-2
CHANNEL PLL

34

34-3    AC

36-2    FIXED PLL    36-1

36

$2*f_{IF}=760MHz$

AC    36-3

37

37-1    1/2

37-2    0    $\pi/2$    I

35-1    35b

35a

380 MHz

35

35-3    AC

35-2    PHASE COMRARATOR

380MHz

$f_{IF}=380MHz$

35-4    AC

37-3    Q

OSCILLATION FREQUENCY FOR TX TRANSMISSION

GSM
$f_{TX\_G}=880-915MHz$

DCS
$f_{TX\_D}=1710-1785MHz$

FIG.7A

Rx = 4    T1    T2    T3

Tadj

Rx

FIG.7B

Tx

Tadv

FIG.7C

Tx

EP 1 217 756 A2